# EUROPÄISCHE PATENTSCHRIFT

(11) **EP 3 631 496 B1**
(45) Veröffentlichungstag und Bekanntmachung des Hinweises auf die Patenterteilung: **06.09.2023**
(21) Anmeldenummer: 18724856.2
(22) Anmeldetag: 15.05.2018
(51) Int. Cl.: G01S 7/481, G01S 17/10, G01S 17/42

(54) **LIDAR-VORRICHTUNG MIT ERHÖHTER ABTASTFREQUENZ UND VERFAHREN ZUM ABTASTEN EINES ABTASTBEREICHES**
LIDAR DEVICE WITH INCREASED SCANNING FREQUENCY AND METHOD FOR SCANNING A REGION TO BE SCANNED
DISPOSITIF LIDAR À VITESSE D'ÉCHANTILLONNAGE ACCRUE ET PROCÉDÉ DE BALAYAGE D'UNE ZONE DE BALAYAGE

(30) Priorität: 23.05.2017 DE 102017208736
(43) Veröffentlichungstag der Anmeldung: 08.04.2020
(73) Patentinhaber: Robert Bosch GmbH, 70442 Stuttgart (DE)
(72) Erfinder: HEUSSNER, Nico, 71636 Ludwigsburg (DE); KAMIL, Mustafa, 71229 Leonberg (DE)
(86) Internationale Anmeldenummer: PCT/EP2018/062436
(87) Internationale Veröffentlichungsnummer: WO 2018/215232

(56) Entgegenhaltungen:
- WO-A1-97/22976
- WO-A1-2012/040749
- DE-A1-102006 040 858
- DE-A1-102013 012 789

## Beschreibung

Die Erfindung betrifft eine LIDAR-Vorrichtung zum Abtasten eines Abtastbereiches mit mindestens einem Strahl sowie ein Verfahren zum Abtasten eines Abtastbereiches mit einer LIDAR-Vorrichtung.

### Stand der Technik

Gängige LIDAR (Light detection and ranging)-Vorrichtungen nutzen einen Laser bzw. eine Strahlenquelle zum Erzeugen eines Strahls, der anschließend über eine Ablenkeinheit zum kontrollierten Abtasten eines Abtastbereiches abgelenkt wird. Eine Ablenkeinheit kann in Form mehrerer rotierbarer Spiegel ausgeführt sein, die nacheinander die auf die Spiegel emittierten Strahlen in eine Richtung eines Abtastbereiches ablenken. Hierbei ist üblicherweise die Strahlenquelle senkrecht zu der Rotationsachse der Spiegel angeordnet. Sofern Objekte in dem Abtastbereich angeordnet sind, können die abgelenkten Strahlen an den Objekten zu der LIDAR-Vorrichtung zurück reflektiert oder gestreut werden. Die reflektierten Strahlen können über die Spiegel zu einem Detektor abgelenkt und die resultierenden Messdaten anschließend ausgewertet werden. Sowohl die Strahlenquelle, als auch der Detektor können dabei ortsfest angeordnet sein. Zum Erhöhen einer Abtastfrequenz des Abtastbereiches können beispielsweise mehr rotierbare Spiegel verwendet werden oder die Spiegel mit einer höheren Rotationsgeschwindigkeit gedreht werden. Zum Ermöglichen einer höheren Rotationsgeschwindigkeit müssen jedoch leistungsfähigere und damit größere Antriebsmotoren verwendet werden. Bei der Verwendung von zusätzlichen Spiegeln können sich die Spiegel gegenseitig behindern. Dies resultiert in einem zunehmend kleineren Abtastbereich mit zunehmender Anzahl an rotierenden Spiegeln.

Aus der DE 10 2013 012 789 A1 ist eine abtastende optoelektronische Detektionseinrichtung, insbesondere ein Laserscanner, für ein Kraftfahrzeug bekannt. Die Detektionseinrichtung umfasst eine Sende- und Empfangseinheit, welche einen optischen Sender zum Aussenden elektromagnetischer Strahlen und einen optischen Empfänger zum Empfangen von reflektierten Strahlen und zum Bereitstellen eines elektrischen Empfangssignals abhängig von den reflektierten Strahlen aufweist. Der Laserscanner umfasst ferner eine Spiegeleinheit mit einem um eine Rotationsachse drehbaren Spiegelträger, welcher mindestens einen dem Sender zugeordneten Sendespiegel zur Umlenkung der ausgesendeten Strahlen und mindestens einen dem optischen Empfänger zugeordneten Empfangsspiegel zur Umlenkung der reflektierten Strahlen trägt. Die Detektionseinrichtung umfasst zwei Sende- und Empfangseinheiten, welche derselben Spiegeleinheit zugeordnet sind.

### Offenbarung der Erfindung

Die der Erfindung zugrunde liegende Aufgabe kann darin gesehen werden, eine LIDAR-Vorrichtung mit einer erhöhten Abtastfrequenz bei gleichbleibenden Abmessungen sowie ein Verfahren zum Betrieb einer derartigen LIDAR-Vorrichtung zu schaffen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird eine LIDAR-Vorrichtung zum Abtasten eines Abtastbereiches mit mindestens einem Strahl bereitgestellt. Die LIDAR-Vorrichtung weist mindestens eine Strahlenquelle zum Erzeugen des mindestens einen Strahls auf. Des Weiteren weist die LIDAR-Vorrichtung mindestens drei um eine Rotationsachse drehbare Spiegel zum Ablenken von an einem Objekt reflektierten Strahlen auf einen senkrecht zu der Rotationsachse der Spiegel ausgerichteten Detektor. Erfindungsgemäß weisen die mindestens drei Spiegel für jeweils einen Wellenlängenbereich eine Reflektivität auf und sind in einem Bereich der Rotationsachse unter einem Winkel miteinander verbunden.

Damit eine LIDAR-Vorrichtung bei gleichem Bauraum bzw. gleichen Abmessungen ohne einen Verlust von einer Empfangsleistung eine höhere Abtastfrequenz aufweist, darf die Reflektion von Spiegeln, welche gerade nicht zum Reflektieren von Strahlen verwendet werden, die Detektion nicht behindern. Dies kann insbesondere durch Spiegel realisiert werden, die Strahlen mit einer Wellenlänge innerhalb eines definierten Wellenlängenbereiches reflektieren können. Strahlen mit einer Wellenlänge, die außerhalb des definierten Wellenlängenbereiches liegt werden hingegen durch mindestens einen Spiegel transmittiert. Derartige wellenlängenselektive Spiegel weisen zusätzlich eine Abhängigkeit des Wellenlängenbereiches von einem Einfallswinkel eines Strahls auf den Spiegel auf. Je nach Drehposition der mindestens zwei Spiegel können für jeweils einen Wellenlängenbereich eine Reflektivität auf und sind in einem Bereich der Rotationsachse unter einem Winkel miteinander verbunden.

Damit eine LIDAR-Vorrichtung bei gleichem Bauraum bzw. gleichen Abmessungen ohne einen Verlust von einer Empfangsleistung eine höhere Abtastfrequenz aufweist, darf die Reflektion von Spiegeln, welche gerade nicht zum Reflektieren von Strahlen verwendet werden, die Detektion nicht behindern. Dies kann erfindungsgemäß durch Spiegel realisiert werden, die Strahlen mit einer Wellenlänge innerhalb eines definierten Wellenlängenbereiches reflektieren können. Strahlen mit einer Wellenlänge, die außerhalb des definierten Wellenlängenbereiches liegt werden hingegen durch mindestens einen Spiegel transmittiert. Derartige wellenlängenselektive Spiegel weisen zusätzlich eine Abhängigkeit des Wellenlängenbereiches von einem Einfallswinkel eines Strahls auf den Spiegel auf. Je nach Drehposition der mindestens drei Spiegel können Strahlen von mindestens einem Spiegel reflektiert werden oder durch mindestens einen Spiegel transmittieren. Der Wellenlängenbereich der jeweiligen Spiegel kann derart eingestellt werden, dass die einzelnen Spiegel sich nicht behindern bzw. sich gegenseitig nicht abschatten. Es ist hierdurch möglich mehrere Spiegel zum Erhöhen der Abtastfrequenz zu verwenden. Der verwendete Bauraum und die Rotationsgeschwindigkeit der Spiegel können unverändert bleiben. Somit kann eine N-fach höhere Abtastrate, mit N=Anzahl der Spiegelflächen, der LIDAR-Vorrichtung erreicht werden. Dies kann neben der Erhöhung der Abtastfrequenz insbesondere für digitale Detektorprinzipien verwendet werden, bei denen eine Histogrammbildung durch eine Pulsdetektion, wie beispielsweise bei SPAD (single photon avalanche diode) Detektoren, realisiert werden kann.

Die mindestens drei Spiegel sind an einer Antriebswelle indirekt rotationssymmetrisch miteinander verbunden, wobei die mindestens drei Spiegel Bragg-Spiegel sind. Bragg-Spiegel sind jeweils nur für einen bestimmten Winkelbereich reflektierend. Trifft ein von einem Objekt zurückgestreuter bzw. reflektierter Strahl unter einem bestimmten Winkel auf einen Spiegel, reflektiert der Bragg-Spiegel dieses Licht auf den Detektor. Reflektierte Strahlen werden beispielsweise senkrecht zur Rotationsachse der Spiegel reflektiert. Fallen beispielsweise reflektierte Strahlen unter einem anderen Winkel auf mindestens einen Bragg-Spiegel, so wird der reflektierte Strahl transmittiert und kann auf diejenige Spiegelfläche fallen, die gerade unter einem "richtigen" Winkel steht um den reflektierten Strahl auf den Detektor reflektieren zu können. Durch den relativ begrenzten Wellenlängenbereich eines Bragg-Spiegels kann ein zusätzlicher, dem Detektor vorgeschalteter, Filter entfallen, da ein Großteil an Störlicht von keinem der Bragg-Spiegel auf den Detektor reflektiert werden kann

Nach einem weiteren Ausführungsbeispiel der LIDAR-Vorrichtung reflektieren die mindestens drei Spiegel ankommende Strahlen abwechselnd auf den Detektor. Hierdurch können die rotierbaren Spiegel mit einer definierten Rotationsgeschwindigkeit unidirektional gedreht werden. Eine Richtungsumkehr der Drehbewegung der Spiegel ist somit nicht notwendig.

Jeder Spiegel weist einen aktiven Winkelbereich um die Rotationsachse auf. Innerhalb des aktiven Winkelbereiches sind ankommende Strahlen auf den Detektor reflektierbar. Basierend auf der Abhängigkeit des Wellenlängenbereiches der Spiegel von einem Einfallswinkel eines Strahls, können nur Strahlen mit einer bestimmten Wellenlänge unter einem definierten Einfallswinkel bzw. unter einem definierten Einfallswinkelbereich in einem ersten Schritt von einem Spiegel reflektiert und in einem zweiten Schritt unter einem derartigen Winkel reflektiert werden, dass der Strahl auf den Detektor trifft. Hieraus resultiert ein Winkelbereich eines Spiegels, innerhalb dessen Strahlen mit einer bestimmten Wellenlänge auf den Detektor umgelenkt oder reflektiert werden können. Es ist somit möglich den Spiegeln eine Filterfunktion zuzuweisen und Störlicht zu reduzieren oder auszublenden.

Jeder Spiegel transmittiert außerhalb des aktiven Winkelbereiches ankommende Strahlen auf mindestens einen weiteren Spiegel. Bei einem senkrecht zu der Rotationsachse der Spiegel ausgerichteten Detektor sind bei mehreren Spiegeln stets Drehwinkel der Spiegel vorhanden, bei denen sich Spiegel teilweise überlappen und somit einen Teil der Strahlen nicht zum Detektor reflektieren können. Treffen Strahlen auf einen erfindungsgemäßen Spiegel, der einen Winkel außerhalb des aktiven Winkelbereiches des jeweiligen Spiegels aufweist, so werden die Strahlen von dem Spiegel transmittiert. Hierdurch können sich mehrere Spiegel nicht gegenseitig abschatten. Es werden nur dann Strahlen reflektiert, wenn diese auch auf den Detektor treffen können.

Die mindestens eine Strahlenquelle ist senkrecht zu der Rotationsachse ausgerichtet, wobei die mindestens drei Spiegel dazu eingerichtet sind, den mindestens einen erzeugten Strahl zum Abtasten des Abtastbereiches abzulenken. Es können somit nicht nur an Objekten reflektierte Strahlen zum Detektor abgelenkt werden, sondern es können auch die von der mindestens einen Strahlenquelle erzeugten Strahlen von der LIDAR-Vorrichtung in den Abtastbereich gestrahlt werden. Die LIDAR-Vorrichtung kann somit auch gleichzeitig erzeugte Strahlen senden und reflektierte Strahlen bzw. zu der LIDAR-Vorrichtung zurückgestreute Strahlen empfangen.

Nach einem weiteren Ausführungsbeispiel der LIDAR-Vorrichtung weisen die mindestens drei Spiegel eine beidseitige Reflektivität für jeweils einen Wellenlängenbereich auf. Insbesondere die als Bragg-Spiegel ausgeführten rotierbaren Spiegel können beidseitig verwendet werden. Dies kann zu einer Verdopplung der Abtastfrequenz der LIDAR-Vorrichtung führen. Eine beidseitige Reflektivität der Spiegel kann beispielsweise in Form einer Beschichtung ausgeführt werden.

Nach einem weiteren bevorzugten Ausführungsbeispiel der LIDAR-Vorrichtung sind mindestens zwei Strahlenquellen zum Erzeugen von mindestens zwei Strahlen mit unterschiedlichen Wellenlängen verwendbar. Da die aktiven Winkelbereiche für beispielsweise zwei nacheinander angeordnete Spiegel sich überlappen oder sogar identisch sein können, ist es vorteilhaft mehrere Strahlenquellen zu verwenden, die Strahlen mit unterschiedlichen Wellenlängen erzeugen können. Es können somit abwechselnd Spiegel mit unterschiedlichen aktiven Winkelbereichen und/oder Wellenlängenbereichen rotierbar angeordnet sein. Die jeweiligen Spiegel können die auf die Spiegel angepassten Strahlen in Richtung des Abtastbereiches reflektieren.

Gemäß eines weiteren Ausführungsbeispiels der LIDAR-Vorrichtung sind die mindestens zwei Strahlen durch die mindestens zwei Strahlenquellen sequenziell erzeugbar. Es werden somit abwechselnd nacheinander Strahlen mit unterschiedlichen Wellenlängen erzeugt, die auf die verwendeten rotierbaren Spiegel angepasst sind. Durch die abwechselnde Pulsreihenfolge können die jeweiligen Reflektionsbereiche der verwendeten Spiegel optimal genutzt werden. Sofern sich die erzeugten Strahlen von einem Objekt zu der LIDAR-Vorrichtung zurück reflektiert wurden, können diese reflektierten Strahlen von dem Detektor registriert und durch die abweichenden Wellenlängen technisch einfacher ausgewertet werden. Hierdurch können auch die jeweiligen zum Reflektieren geeigneten Wellenlängenbereiche der Spiegel während einer Auswertung von Detektordaten eindeutig unterschieden werden.

Nach einem weiteren Ausführungsbeispiel der LIDAR-Vorrichtung weist der Detektor einen spektralen Detektionsbereich auf, der mindestens den Wellenlängenbereichen der mindestens drei Spiegel entspricht. Um eine vollständige Trennung der Reflektionsbereiche bzw. der Wellenlängenbereiche der Spiegel sicherzustellen, kann der erforderliche spektrale Detektionsbereich mit der Anzahl der verwendeten Spiegelflächen bzw. zugehörigen Wellenlängen steigen. Hierdurch kann sichergestellt werden, dass der Detektor alle auf ihn gelenkten Strahlen vollständig registrieren kann.

Nach einem weiteren Aspekt der Erfindung wird ein Verfahren zum Abtasten von Raumwinkeln mit einer LIDAR-Vorrichtung nach dem vorhergehenden Aspekt der Erfindung bereitgestellt. In einem ersten Schritt wird mindestens ein Strahl erzeugt. Der mindestens eine Strahl wird zum Abtasten eines Raumwinkels verwendet. Mindestens ein an einem Objekt reflektierter Strahl wird von mindestens drei um eine Rotationsachse drehbaren Spiegeln auf einen Detektor gelenkt, wobei abhängig von einer Drehposition der mindestens drei Spiegel reflektierte Strahlen durch einen ersten der mindestens drei Spiegel auf mindestens einen zweiten Spiegel transmittiert werden und von dem mindestens einen zweiten der mindestens drei Spiegel auf den Detektor reflektiert werden oder die reflektierten Strahlen durch den ersten Spiegel auf den Detektor reflektiert werden.

Sofern ein Objekt in dem Abtastbereich positioniert ist, können die erzeugten und in den Abtastbereich gesendeten erzeugten Strahlen an dem Objekt reflektiert werden. Die rotierenden Spiegel können hierbei die reflektierten Strahlen empfangen und auf den Detektor ablenken. Die Spiegel können vorzugsweise eine wellenlängenselektive Reflektivität und/oder eine einfallswinkelselektive Reflektivität aufweisen. So können beispielsweise Strahlen nur dann von den Spiegeln reflektiert werden, wenn die Strahlen eine bestimmte Wellenlänge aufweisen und unter einem definierten Einfallswinkel auf die Spiegel treffen. Die Reflektivität kann hierbei innerhalb eines Bereiches an Einfallswinkeln und/oder Wellenlängen vorhanden sein. Wenn beispielsweise ein ankommender Strahl optische Eigenschaften aufweist, die sich außerhalb der Spezifikationen des jeweiligen Spiegels befinden, wird dieser Strahl nicht reflektiert. Hierdurch kann beispielsweise verhindert werden, dass reflektierte Strahlen den Detektor verfehlen können oder Störreflexe auf den Detektor gelenkt werden. Somit können die rotierenden Spiegel einen Filter ersetzen. Ein reflektierter Strahl, der von einem ersten Spiegel nicht reflektiert wird, kann bevorzugterweise ungehindert durch den ersten Spiegel auf einen weiteren in einem Strahlengang des reflektierten Strahls angeordneten Spiegel transmittieren. Vorzugsweise ist der weitere Spiegel derart relativ zum Detektor ausgerichtet, dass der transmittierte Strahl zum Detektor abgelenkt werden kann. Hierdurch kann insbesondere verhindert werden, dass sich Spiegel gegenseitig abschatten oder behindern können. Auch bei einer höheren Anzahl an rotierbaren Spiegeln zum Erhöhen einer Abtastfrequenz, kann der Abtastbereich uneingeschränkt belichtet werden. Durch diese Maßnahme können die Abmessungen einer derartigen LIDAR-Vorrichtung trotz Verwendung mehrerer Spiegel konstant bleiben.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer LIDAR-Vorrichtung gemäß einem ersten Ausführungsbeispiel,
- Fig. 2: eine schematische Darstellung einer LIDAR-Vorrichtung gemäß einem zweiten Ausführungsbeispiel,
- Fig. 3: eine schematische Darstellung von rotierbaren Spiegeln einer LIDAR-Vorrichtung gemäß einem dritten Ausführungsbeispiel,
- Fig. 4: eine schematische Darstellung von rotierbaren Spiegeln der LIDAR-Vorrichtung gemäß dem ersten Ausführungsbeispiel und
- Fig. 5a,b: schematische Darstellung von Reflektivitäten der rotierbaren Spiegel in Abhängigkeit von Wellenlängen.

In den Figuren weisen dieselben konstruktiven Elemente jeweils dieselben Bezugsziffern auf.

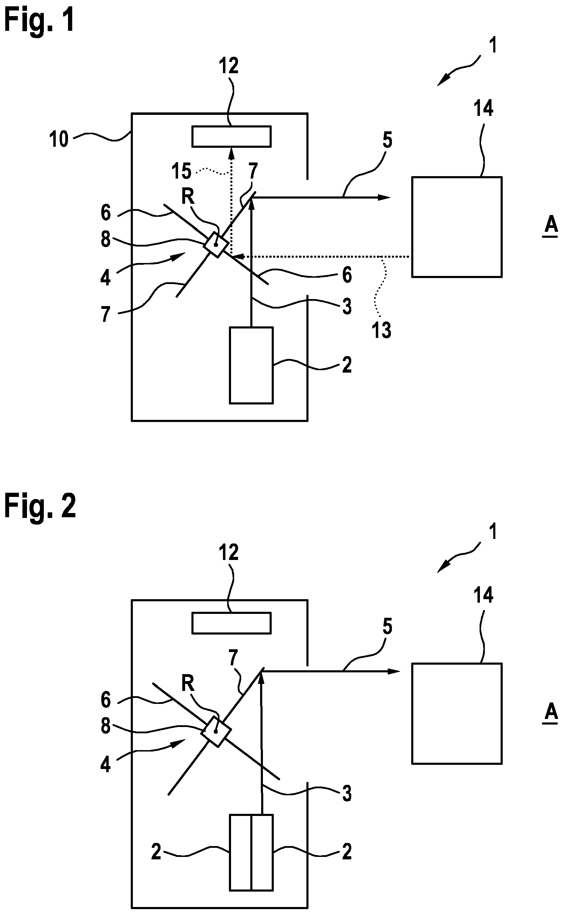

Die Figur 1 zeigt eine schematische Darstellung einer LIDAR-Vorrichtung 1 gemäß einem ersten Ausführungsbeispiel. Die LIDAR-Vorrichtung 1 weist eine Strahlenquelle 2 auf, die als ein Infrarotlaser 2 ausgeführt ist. Die Strahlenquelle 2 erzeugt gepulst Strahlen 3, die senkrecht in Richtung einer Rotationsachse R einer Ablenkeinheit 4 gerichtet emittiert werden.

Die Ablenkeinheit 4 besteht gemäß dem Ausführungsbeispiel aus vier Bragg-Spiegeln 6, 7, die im Bereich der Rotationsachse R an einer Antriebswelle 8 indirekt rotationssymmetrisch miteinander verbunden sind. Die Spiegel 6, 7 können beispielsweise jeweils eine beidseitige Beschichtung aus einer Vielzahl an λ/2-Bereichen mit abwechselnd unterschiedlichen Brechungsindizes aufweisen. Hierbei entspricht λ einer Wellenlänge eines jeweiligen erzeugten Strahls 3. Ausgehend von der Beschichtung der Bragg-Spiegel 6, 7 können ankommende Strahlen 3 nur unter einem bestimmten Einfallswinkel α und mit einer bestimmten Wellenlänge λ derart an den Bragg-Spiegeln 7 reflektiert werden, dass reflektierte Strahlen 5 durch konstruktive Interferenz entstehen und aus einem Gehäuse 10 der LIDAR-Vorrichtung 1 in Richtung eines Abtastbereiches A emittiert werden können. Weicht der Einfallswinkel α oder die Wellenlänge λ eines Strahls 3 von einem Wellenlängenbereich der Beschichtung bzw. der Bragg-Spiegel 6 ab, so sind die Spiegel 6 für die Strahlen 3 transparent für die ankommenden Strahlen 3. Die Strahlen 3 können somit auf einen dem für die Strahlen 3 transparenten Spiegel 6 nachgeschalteten Spiegel 7 fallen und an diesem Spiegel 7 reflektiert werden in Richtung des Abtastbereiches A. Die Ablenkeinheit 4 rotiert mit einer definierten Rotationsgeschwindigkeit um die Rotationsachse R. Hierdurch kann die LIDAR-Vorrichtung 1 mit den reflektierten Strahlen 5 den Abtastbereich A belichten bzw. abtasten.

Umgekehrt kann die Ablenkeinheit 4 nicht nur erzeugte Strahlen 3 aus der LIDAR-Vorrichtung 1 hinaus senden, sondern auch ankommende Strahlen 13 empfangen und die empfangenen Strahlen 15 auf einen Detektor 12 leiten. Die ankommenden bzw. an einem Objekt 14 reflektierten Strahlen 13 entstehen hierbei als Reflexionen oder gestreutes Licht der aus der LIDAR-Vorrichtung 1 emittierten Strahlen 5. Durch die beidseitige Beschichtung der Spiegel 6, 7 können die reflektierten Strahlen 13 von den Spiegeln 6, 7 je nach Drehposition der Ablenkeinheit 4 bzw. der jeweiligen Spiegel 6, 7 durch die Spiegel 6, 7 transmittieren oder zum Detektor 12 reflektiert werden. Hierbei können die Spiegel 6, 7 als Filter dienen, da unerwünschtes Streulicht die Kriterien für eine Reflektion an den Spiegel 6, 7 nicht erfüllt.

Die in Richtung der Ablenkeinheit 4 ankommenden Strahlen 3, 13 können hierbei auch durch mehrere Spiegel 6, 7 nacheinander transmittieren, bis die Kriterien für eine Reflektion erfüllt sind. Es kann somit eine Anzahl der Spiegel 6, 7 erhöht werden, um bei gleichbleibender Rotationsgeschwindigkeit eine höhere Abtastfrequenz des Abtastbereiches A zu ermöglichen.

In der Figur 2 ist eine schematische Darstellung einer LIDAR-Vorrichtung 1 gemäß einem zweiten Ausführungsbeispiel. Im Unterschied zum ersten Ausführungsbeispiel weist die LIDAR-Vorrichtung 1 zwei Strahlenquellen 2 auf, die abwechselnd nacheinander Strahlen 3 erzeugen und in Richtung der Ablenkeinheit 4 emittieren. Hierdurch können unterschiedlich beschichtete Spiegel 6, 7 mit Strahlen 3 mit jeweils auf die Spiegel 6, 7 angepassten Wellenlängen A belichtet werden. Je nach Drehwinkelstellung β der Ablenkeinheit 4 können somit auch beidseitig beschichtete Spiegel 6, 7 durch Strahlen 3 mit geeigneten Wellenlängen λ transmittiert werden. Hierdurch können abhängig von der Drehwinkelstellung β der Ablenkeinheit 4 unterschiedliche Strahlenquellen 2 angesteuert werden, um mit den Strahlen 5 den Abtastbereich A belichten zu können.

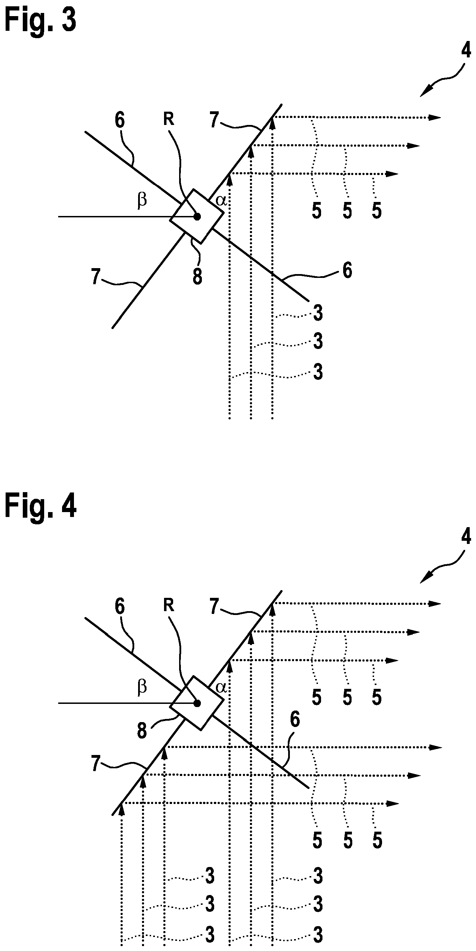

Die Figur 3 zeigt eine schematische Darstellung von rotierbaren Spiegeln 6, 7 einer LIDAR-Vorrichtung 1 gemäß einem dritten Ausführungsbeispiel. Die verwendeten Spiegel 6, 7 der Ablenkeinheit 4 weisen hier eine einseitige wellenlängenselektive Reflektivität auf.

In der Figur 4 ist eine schematische Darstellung von rotierbaren Spiegeln 6, 7 der LIDAR-Vorrichtung 1 gemäß dem ersten Ausführungsbeispiel dargestellt. Es wird verdeutlicht, dass die erzeugten Strahlen 3 auch gleichzeitig mehrere Spiegel 7 belichten können und so beispielsweise mehrere in Richtung des Abtastbereiches A reflektierte Strahlen 5 gleichzeitig bzw. Strahlen 5 in Form einer Linie emittiert werden können. Die im Strahlengang der erzeugten Strahlen 3 und der reflektierten Strahlen 5 positionierten Spiegel 6 werden verlustfrei transmittiert, da die Voraussetzungen für eine Reflektion nicht erfüllt sind.

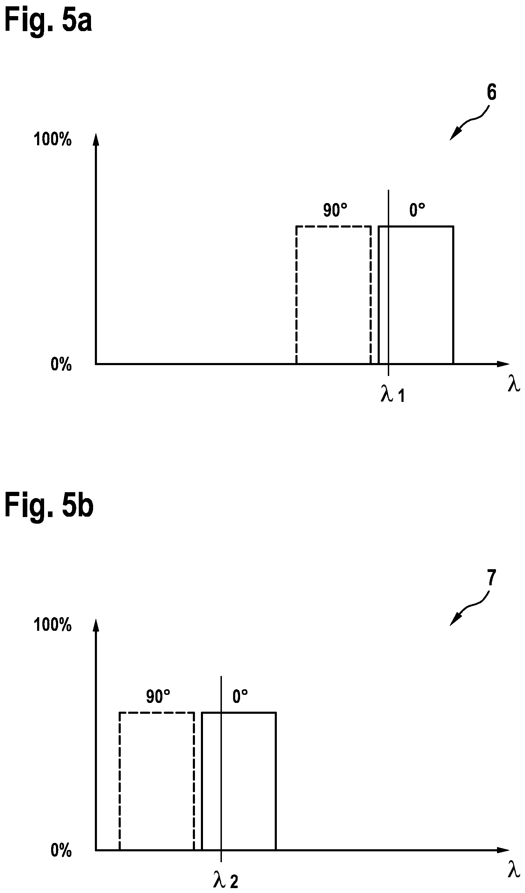

Die Figuren 5a und 5b zeigen schematisch Diagramme, die Reflektivitäten der jeweiligen rotierbaren Spiegel 6, 7 prozentual in Abhängigkeit von Wellenlängen λ aufzeigen. Dies können beispielsweise Spiegel 6, 7 einer LIDAR-Vorrichtung 1 gemäß dem ersten Ausführungsbeispiel sein. Verdeutlicht sind insbesondere Verschiebungen der Wellenlängenbereiche bei unterschiedlichen Einfallswinkel α der Strahlen 3 auf die Spiegel 6, 7. Der Einfachheit halber sind nur Einfallswinkel α von 0° und 90° aufgezeigt.

## Patentansprüche

1. LIDAR-Vorrichtung (1) zum Abtasten eines Abtastbereiches (A) mit mindestens einem Strahl (5), mit mindestens einer Strahlenquelle (2) zum Erzeugen des mindestens einen Strahls (3, 5), mit mindestens drei um eine Rotationsachse (R) drehbaren Spiegeln (6, 7) zum Ablenken von an einem Objekt (14) reflektierten Strahlen (13) auf einen senkrecht zu der Rotationsachse (R) ausgerichteten Detektor (12), wobei die mindestens drei Spiegel (6, 7) für jeweils einen Wellenlängenbereich eine Reflektivität aufweisen und in einem Bereich der Rotationsachse (R, 8) unter einem Winkel miteinander verbunden sind, wobei die mindestens eine Strahlenquelle (2) senkrecht zu der Rotationsachse (R) ausgerichtet ist und die mindestens drei Spiegel (6, 7) dazu eingerichtet sind, den mindestens einen erzeugten Strahl (3) zum Abtasten des Abtastbereiches (A) abzulenken; und wobei die reflektierten Strahlen (13) senkrecht zur Rotationsachse (R) des drehbaren Spiegels (6, 7) reflektierbar sind; wobei die mindestens drei Spiegel (6, 7) an einer Antriebswelle (8) indirekt rotationssymmetrisch miteinander verbunden sind, wobei die mindestens drei Spiegel (6, 7) Bragg-Spiegel sind; und wobei jeder Spiegel (6, 7) einen aktiven Winkelbereich um die Rotationsachse (R) aufweist und dazu eingerichtet ist, innerhalb des aktiven Winkelbereiches ankommende Strahlen (13) auf den Detektor (12) zu reflektieren; und wobei jeder Spiegel (6, 7) außerhalb des aktiven Winkelbereiches ankommende Strahlen (13) auf mindestens einen weiteren Spiegel (6, 7) transmittiert.

2. LIDAR-Vorrichtung nach Anspruch 1, wobei die mindestens drei Spiegel (6, 7) ankommende Strahlen (13) abwechselnd auf den Detektor (12) reflektieren.

3. LIDAR-Vorrichtung nach einem der Ansprüche 1 bis 2, wobei die mindestens drei Spiegel (6, 7) eine beidseitige Reflektivität für jeweils einen Wellenlängenbereich aufweisen.

4. LIDAR-Vorrichtung nach einem der Ansprüche 1 bis 3, wobei mindestens zwei Strahlenquellen (2) zum Erzeugen von mindestens zwei Strahlen (3) mit unterschiedlichen Wellenlängen (λ) verwendbar sind.

5. LIDAR-Vorrichtung nach Anspruch 4, wobei die mindestens zwei Strahlen (3) durch die mindestens zwei Strahlenquellen (2) sequenziell erzeugbar sind.

6. LIDAR-Vorrichtung nach einem der Ansprüche 1 bis 5, wobei der Detektor (12) einen spektralen Detektionsbereich aufweist, der mindestens den Wellenlängenbereichen der mindestens drei Spiegel (6, 7) entspricht.

7. Verfahren zum Abtasten von Abtastbereichen (A) mit einer LIDAR-Vorrichtung (1) nach einem der vorhergehenden Ansprüche, wobei mindestens ein Strahl (3) erzeugt wird, mit dem mindestens einen Strahl (5) ein Abtastbereich (A) abgetastet wird, mindestens ein an einem Objekt (14) reflektierter Strahl (13) von mindestens drei um eine Rotationsachse (R) drehbaren Spiegeln (6, 7) auf einen Detektor (12) gelenkt wird, wobei abhängig von einer Drehposition der mindestens drei Spiegel (6, 7) reflektierte Strahlen (13)
- durch einen ersten der mindestens drei Spiegel (6) auf mindestens einen zweiten der mindestens drei Spiegel (7) transmittiert werden und von dem mindestens einen zweiten Spiegel (7) auf den Detektor (12) reflektiert werden, oder
- durch den ersten Spiegel (6) auf den Detektor (12) reflektiert werden.

## Claims

1. LIDAR device (1) for scanning a region to be scanned (A) by means of at least one beam (5), comprising at least one radiation source (2) for generating the at least one beam (3, 5), comprising at least three mirrors (6, 7) rotatable about an axis of rotation (R) for deflecting beams (13) reflected at an object (14) onto a detector (12) oriented perpendicularly to the axis of rotation (R), wherein the at least three mirrors (6, 7) have a reflectivity for respective wavelength ranges and are connected to one another at an angle in a region of the axis of rotation (R, 8), wherein the at least one radiation source (2) is oriented perpendicularly to the axis of rotation (R) and the at least three mirrors (6, 7) are configured to deflect the at least one generated beam (3) for scanning the region to be scanned (A); and wherein the reflected beams (13) are reflectable perpendicularly to the axis of rotation (R) of the rotatable mirror (6, 7); wherein the at least three mirrors (6, 7) are connected to one another indirectly rotationally symmetrically at a drive shaft (8), wherein the at least three mirrors (6, 7) are Bragg mirrors; and wherein each mirror (6, 7) has an active angle range around the axis of rotation (R) and is configured to reflect beams (13) incident within the active angle range onto the detector (12); and wherein each mirror (6, 7) transmits beams (13) incident outside the active angle range onto at least one further mirror (6, 7).

2. LIDAR device according to Claim 1, wherein the at least three mirrors (6, 7) reflect incident beams (13) alternately onto the detector (12).

3. LIDAR device according to either of Claims 1 and 2, wherein the at least three mirrors (6, 7) have a reflectivity on both sides for respective wavelength ranges.

4. LIDAR device according to any of Claims 1 to 3, wherein at least two radiation sources (2) are usable for generating at least two beams (3) having different wavelengths (λ).

5. LIDAR device according to Claim 4, wherein the at least two beams (3) are generable sequentially by the at least two radiation sources (2).

6. LIDAR device according to any of Claims 1 to 5, wherein the detector (12) has a spectral detection range corresponding to at least the wavelength ranges of the at least three mirrors (6, 7).

7. Method for scanning regions (A) to be scanned using a LIDAR device (1) according to any of the preceding claims, wherein at least one beam (3) is generated, a region to be scanned (A) is scanned by means of the at least one beam (5), at least one beam (13) reflected at an object (14) is directed onto a detector (12) by at least three mirrors (6, 7) rotatable about an axis of rotation (R), wherein depending on a rotational position of the at least three mirrors (6, 7) reflected beams (13)
- are transmitted by a first mirror of the at least three mirrors (6) onto at least one second mirror of the at least three mirrors (7) and are reflected by the at least one second mirror (7) onto the detector (12), or
- are reflected by the first mirror (6) onto the detector (12).

## Revendications

1. Dispositif LIDAR (1) destiné à balayer une zone de balayage (A) avec au moins un rayon (5), comprenant au moins une source de rayonnement (2) destinée à générer l'au moins un rayon (3, 5), comprenant au moins trois miroirs (6, 7) rotatifs autour d'un axe de rotation (R) en vue de dévier des rayons (13) réfléchis sur un objet (14) sur un détecteur (12) orienté perpendiculairement à l'axe de rotation (R), les au moins trois miroirs (6, 7) présentant une réflectivité respectivement pour une plage de longueurs d'onde et étant reliés entre eux selon un angle donné dans une zone de l'axe de rotation (R, 8), l'au moins une source de rayonnement (2) étant orientée perpendiculairement à l'axe de rotation (R) et les au moins trois miroirs (6, 7) étant conçus pour dévier l'au moins un rayon (3) généré en vue de balayer la zone de balayage (A) ; et les rayons (13) réfléchis pouvant être réfléchis perpendiculairement à l'axe de rotation (R) du miroir (6, 7) rotatif ; les au moins trois miroirs (6, 7) étant reliés entre eux indirectement en symétrie rotationnelle au niveau d'un arbre d'entraînement (8), les au moins trois miroirs (6, 7) étant des miroirs de Bragg ; et chaque miroir (6, 7) possédant une plage angulaire active autour de l'axe de rotation (R) et étant conçu pour réfléchir sur le détecteur (12) les rayons (13) arrivant à l'intérieur de la plage angulaire active ; et chaque miroir (6, 7) transmettant les rayons (13) arrivant en dehors de la plage angulaire active sur au moins un miroir (6, 7) supplémentaire.

2. Dispositif LIDAR selon la revendication 1, les au moins trois miroirs (6, 7) réfléchissant les rayons (13) arrivant en alternance sur le détecteur (12).

3. Dispositif LIDAR selon l'une des revendications 1 à 2, les au moins trois miroirs (6, 7) possédant une réflectivité bilatérale respectivement pour une plage de longueurs d'onde.

4. Dispositif LIDAR selon l'une des revendications 1 à 3, au moins deux sources de rayonnement (2) destinées à générer au moins deux rayons (3) ayant des longueurs d'onde (□) différentes pouvant être utilisées.

5. Dispositif LIDAR selon la revendication 4, les au moins deux rayons (3) pouvant être générés séquentiellement par les au moins deux sources de rayonnement (2).

6. Dispositif LIDAR selon l'une des revendications 1 à 5, le détecteur (12) possédant une plage de détection spectrale qui correspond au moins aux plages de longueurs d'onde des au moins trois miroirs (6, 7).

7. Procédé de balayage de zones de balayage (A) avec un dispositif LIDAR selon l'une des revendications précédentes, au moins un rayon (3) étant généré, une zone de balayage (A) étant balayée avec l'au moins un rayon (5), au moins un rayon (13) réfléchi sur un objet (14) étant dirigé sur un détecteur (12) par au moins trois miroirs (6, 7) rotatifs autour d'un axe de rotation (R), les rayons réfléchis (13), en fonction d'une position de rotation des au moins trois miroirs (6, 7),
- étant transmis par un premier des au moins trois miroirs (6) sur au moins un deuxième des au moins trois miroirs (7) et réfléchis sur le détecteur (12) par l'au moins un deuxième miroir (7), ou
- étant réfléchis sur le détecteur (12) par le premier miroir (6).
